# EUROPEAN PATENT APPLICATION

(11) **EP 0 995 669 A1**
(43) Date of publication of application: **26.04.2000**
(21) Application number: 99203433.0
(22) Date of filing: 19.10.1999
(51) Int. Cl.: B62D 53/06

(54) **Device and process for coupling a hauler to a load, a hauling vehicle and trailer for use therewith**

(30) Priority: 19.10.1998 NL 1010346
(71) Applicant: TERBERG BENSCHOP B.V., NL-3405 XK Benshop (NL)
(72) Inventor: Verdam, Gerardus Adrianus, 3628 BK Kockengen (NL)
(74) Representative: Land, Addick Adrianus Gosling

(57) **Abstract**

The present invention relates to a device for coupling a tractor to cargo, for instance for transport of this cargo in and out of a ship, wherein the coupling device comprises:
- an at least partly curved, for instance goose neck-shaped connecting piece (2);
- pivoting means (11) arranged on the connecting piece on the side to which the tractor is to be coupled; and
- tilting means (7) for moving the connecting piece up and downward relative to the pivot point on the side which can be coupled to the cargo.

The present invention further provides a tractor vehicle provided with supporting means (48) for preferably supporting the connecting piece forward of a conventional saddle coupling.

## Description

The importance of roll on/roll off transport, wherein containers and trailers of goods vehicles are driven on and off a ship, is still increasing. The weight (and dimensions) of such cargo is likewise increasing.

In a first form of transport containers or general cargo up to a weight of 120 tons or more are placed on a trailer provided on one side with wheels, wherein the trailers with the cargo are driven on and off the ship using pulling vehicles which are provided with an arm which is clamped fixedly in an opening of the trailer and moved slightly upward in order to lift the front side of the trailer off the ground and drive the trailer with containers on and off the ship.

In another form of transport the containers (or general cargo) are placed on a bottom part or cassette, beneath which a trailer can be driven by a tractor vehicle, which trailer is provided on one side with hydraulically upward and downward movable wheels in order to raise the container(s) off the ground.

In current practice a goose neck-like member (goose neck) is coupled to an original saddle coupling of the tractor vehicle, which member is movable up and downward using hydraulic means to raise the saddle provided on the vehicle. Such a saddle is situated close to the rear of the tractor vehicle, for instance between the rear wheels thereof.

The heavy cargo has to be driven in and out of the ship over gradients of for instance 10 to 15%. The loading capacity of the known trailers is hereby (too) limited, since when cargo is too heavy and in the case of acceleration/deceleration and gradients there is the possibility of the load on the front axle of the vehicle becoming too small and, in the worst case, of the tractor even tipping over backwards. For this reason it has already been proposed to arrange a ballast weight close to the front axle of the tractor. It has further been proposed to move the saddle on the tractor hydraulically upward as well as forward when driving with load. This construction is rather complicated and therefore costly. It has also been proposed to continually measure the minimal load on the front axle of the tractor, so that the saddle coupling can be moved automatically downward in the case of too small a front load. Finally, the conventional goose neck on the front side is provided in some cases with a ballast weight in order to provide a balanced connection to the saddle, even when there is no load arranged on the goose neck.

The present invention has for its object to obviate the above stated problems, and more particularly to provide more loading capacity for the tractor, a good weight distribution thereon, less overloading of components of the vehicle and the goose neck and/or to increase safety. It is further recommended that the tractor can likewise be used for the conventional goose necks and trailers. Preferably as little ballast weight as possible is applied, so as not to make the construction unnecessarily heavy, while the length of the combination is kept as small as possible.

The present invention provides a device for coupling a tractor to cargo, for instance for transport of this cargo in and out of a ship, wherein the coupling device comprises:
- an at least partly curved, for instance goose neck-shaped connecting piece;
- pivoting means arranged on the connecting piece on the side to which the tractor is to be coupled; and
- tilting means for moving the connecting piece up and downward relative to the pivot point on the side which can be coupled to the cargo.

The pivoting means must enable tilting of the connecting piece and swivelling movements of the load behind a tractor vehicle. The pivoting means preferably comprise a ball joint.

In another preferred embodiment the pivoting means preferably comprise a device wherein the pivoting means comprise a substantially horizontally extending shaft which is supported in a bearing part rotatable on a vertical axis, in order to prevent sideways tilting of highly stacked cargo.

The tilting means can be coupled to the hydraulic system of the vehicle and preferably comprise a hydraulic cylinder and a pivotable arm.

The present invention further provides a tractor vehicle provided with supporting means for supporting the connecting piece preferably forward of a conventional saddle coupling.

The tractor vehicle is preferably provided with a saddle on which the goose neck can also rest in the so-called transporting position, i.e. wherein no cargo is coupled on. Using the upward or downward movement of the saddle coupling the desired position of the goose neck can then be obtained in transporting position or during coupling-on. After coupling-on of the cargo the saddle coupling can be placed in its lowermost rest position and functionally disabled.

The supporting means on the vehicle preferably comprise a bowl-shaped bearing on which the vertical load is carried, while a cardan movement of the ball joint is made possible.

The goose neck is preferably provided on the underside with a preferably wedge-shaped downward protruding pin portion, which in the transporting position in a slot on the saddle coupling fixes the goose neck against slewing.

Such a connecting piece can be picked up from a so-called holder which is adapted such that the tractor vehicle can be driven under the pivoting means, whereafter the tilting means can be coupled to the hydraulic system of the vehicle. The tractor vehicle is preferably provided with clamping means for fixedly clamping the pivoting means on the vehicle, preferably forward of the conventional saddle coupling and the rear wheels.

In a further preferred embodiment of the present invention a coupling device is welded fixedly to a trailer which can be driven under the cargo by the tractor vehicle. The trailer can be provided with hydraulically up and downward movable wheels for lifting the cargo from the ground.

In addition, the present invention provides a method for driving cargo on and off a ship.

Further advantages, features and details of the present invention will be elucidated on the basis of the following description of preferred embodiments thereof with reference to the annexed figures, in which:
fig. 1A respectively 1B show perspective side views of a first preferred embodiment of a tractor vehicle device as according to the present invention in a first respectively second position;
fig. 2 shows a perspective pulled-apart view of detail II in fig. 1B;
fig. 3A respectively 3B show a partly schematic view of detail III of fig. 2 in a first respectively second position;
fig. 4A respectively 4B show a perspective view of a second preferred embodiment of a device according to the present invention in a first respectively second position;
fig. 5 shows a perspective view of an alternative embodiment of the detail shown in fig. 3A and 3B;
fig. 6A respectively 6B show perspective views of the detail shown in fig. 5 in a first respectively second position;
fig. 7 shows a perspective view elucidating the coupling of a device according to the present invention to a vehicle according to the present invention; and
fig. 8A respectively 8B show a perspective, respectively exploded view of a further preferred embodiment of a device according to the present invention; and
fig. 9 shows a partly cross-sectional side view of the device shown in fig. 8A and 8B.

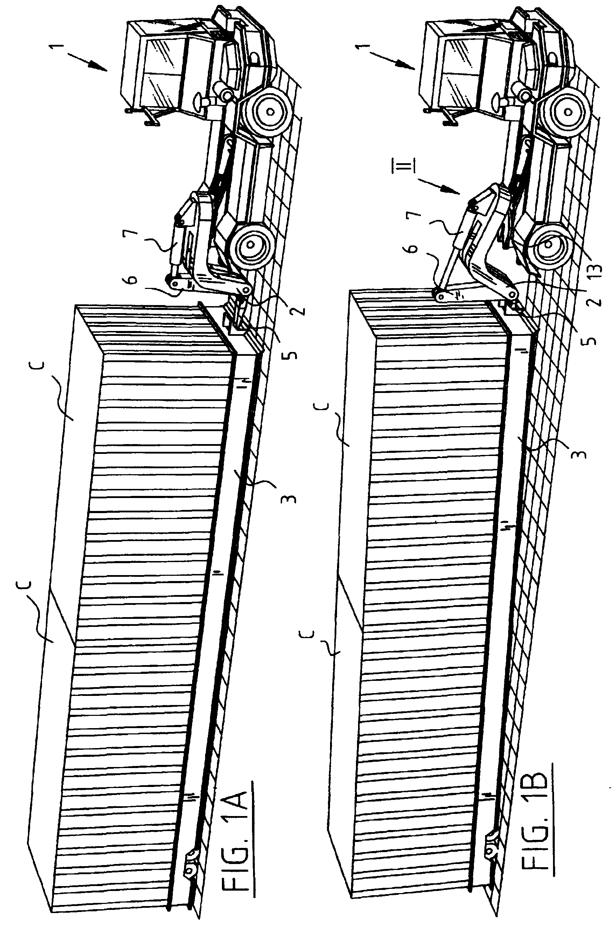

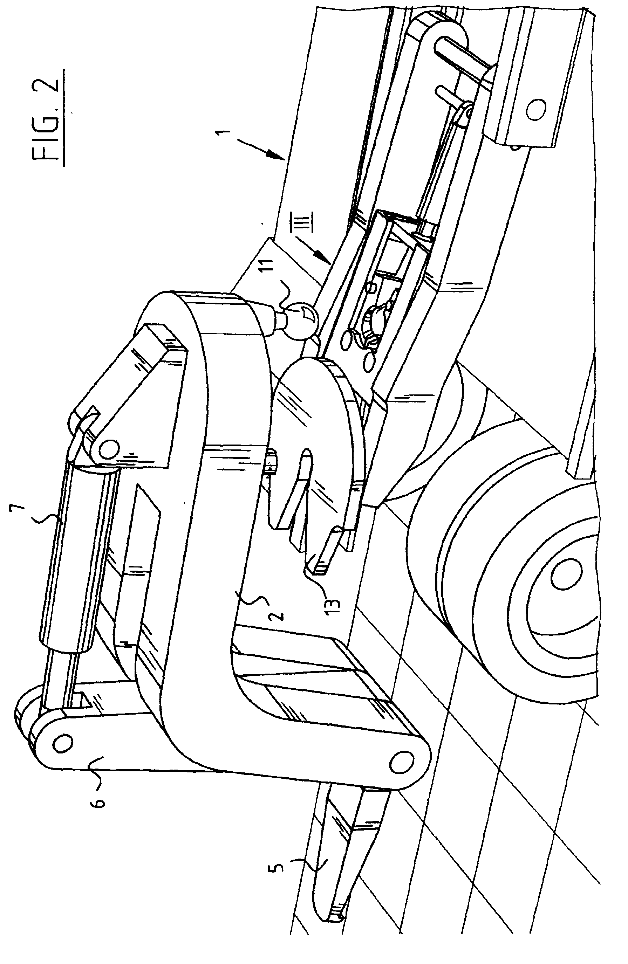

A goose neck 2 is coupled to a tractor vehicle 1 (fig. 1A, 1B) at a location forward of a saddle coupling 3 (fig. 1B, 2). The cargo, for instance containers C, are placed on a trailer 3 provided on the front side with an opening 4 into which an arm 5 (with per se known hook attachment) arranged on goose neck 2 can be fixedly clamped. Arranged on goose neck 2 close to the fixing point of arm 5 is a pivotable arm 6 which on the other side is arranged pivotally on a hydraulic cylinder 7. Trailer 3 is provided at the rear with wheels.

When a tractor 1 must pick up containers C from for instance a ship, goose neck 2 is coupled on first of all. The goose neck is disposed for this purpose in a holder, so that vehicle 1 can be driven under the goose neck and the hydraulic cylinder can be coupled to the hydraulic system of the vehicle. Once the goose neck has been arranged on tractor vehicle 1, arm 5 is driven into opening 4 and clamped therein in conventional manner. Using the hydraulic cylinder the goose neck is tilted relative to the tractor vehicle and the cargo can be moved.

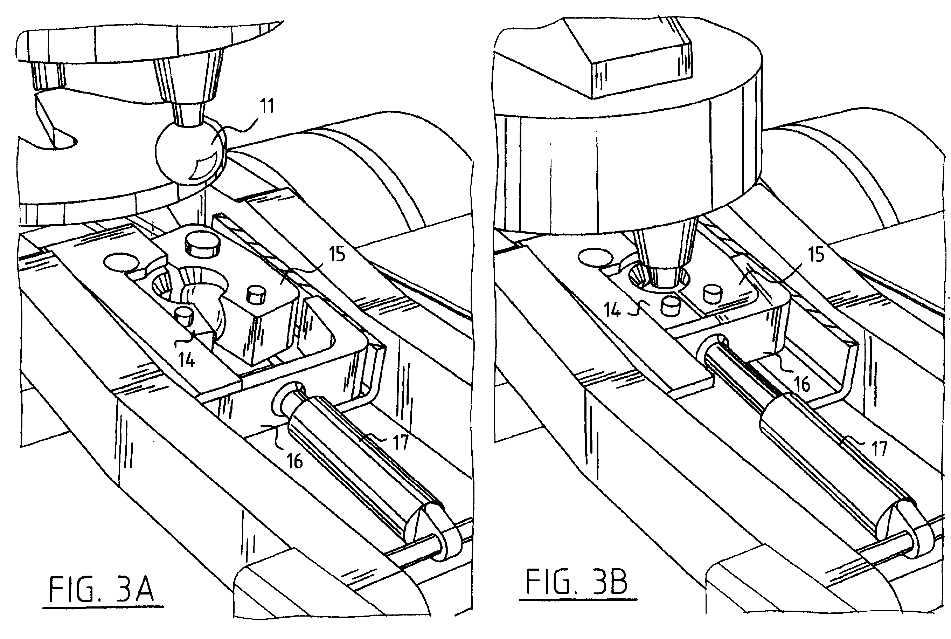

As shown particularly in figures 2, 3A and 3B, a ball joint 11 is arranged on the front part of the goose neck, which joint can be supported and clamped on vehicle 1 at a position located further to the front than saddle coupling 13 which is intended for coupling of trailers of goods vehicles. This location, and the tilting of the goose neck relative to this location, prevents the load on the front axle becoming too small, particularly in the case of heavy cargo. Fig. 2 also shows a preferably wedge-shaped pin 14 which in the non-loaded transporting position engages in a slot in saddle 13, so that the position of the goose neck is then fixed and slewing thereof is prevented.

Ball joint 11 is supported on a bowl-shaped bearing (not shown) and held fast between two clamping jaws 14 and 15, which in the position shown in fig. 3A are held apart using a heavy spring (not shown).

After placing of the ball joint between the clamping jaws these clamping jaws 14 and 15 are moved towards each other in order to enclose ball joint 11 using a fork 16 (fig. 3B) which can be operated using a hydraulic or pneumatic cylinder 17.

Preferably arranged on the underside of the bowl-shaped bearing is an actuator pin which sets cylinder 17 into operation as soon as the ball joint depresses the actuator pin.

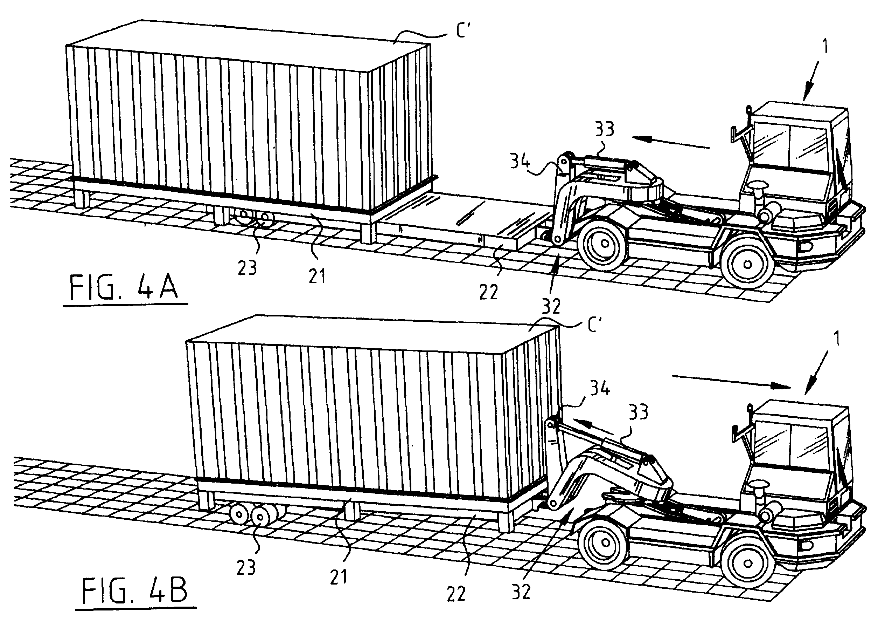

In a further preferred embodiment of the invention as shown in fig. 4A and 4B, a container C' is placed on a support member 21, also known in practice as a cassette, so that a trailer 22 provided at the rear with wheels 23 can be driven under the cargo. Welded onto trailer 22 is a goose neck 32 which is provided with a cylinder 33 and a pivotable arm 34, the operation of which corresponds with arm 6 and cylinder 7 in co-action with goose neck 2 as described in the foregoing figures. The support of goose neck 2 on vehicle 1 also corresponds with the support shown in fig. 1-3.

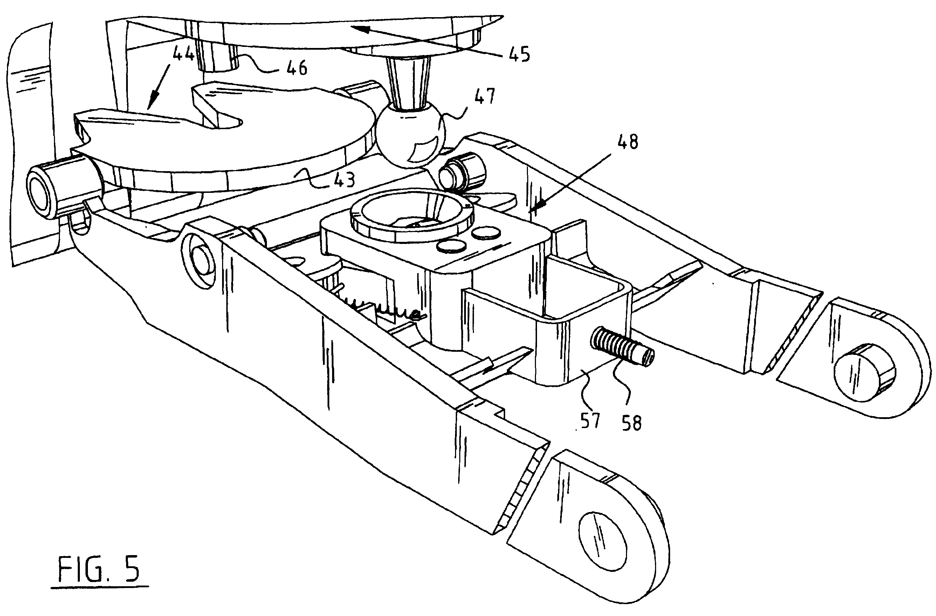

In a further developed embodiment of the construction for support of a ball joint on the vehicle (fig. 5), a saddle 43 is provided with a slot 44 and a goose neck 45 is provided on the underside with a pin part 46 which fits into slot 44. On the front side goose neck 45 is provided with a ball 47 which can be inserted and clamped fixedly into a support part 48 on the tractor.

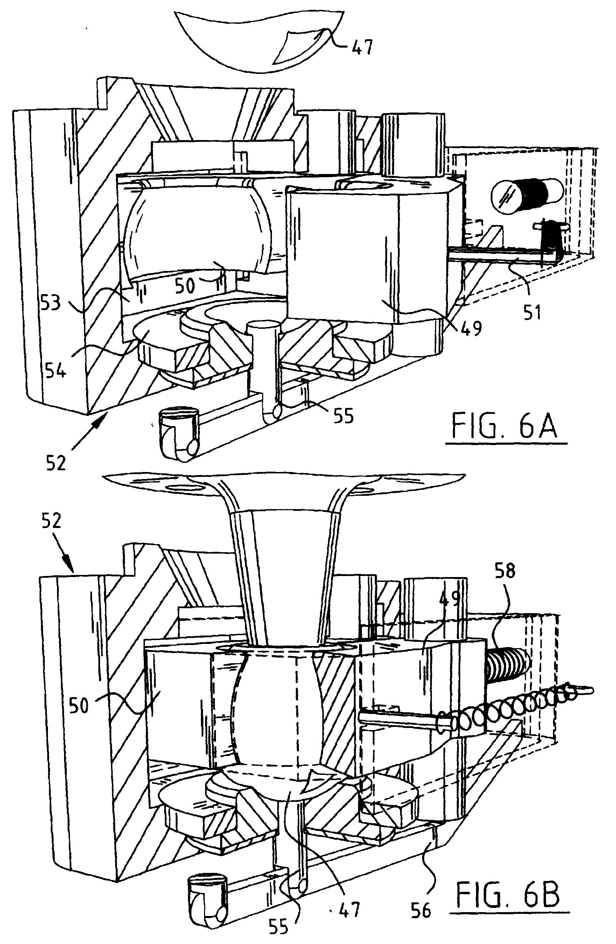

As can be seen particularly clearly in fig. 6A, clamping jaws 49, 50 are held apart by respective springs 51 in the position shown in fig. 5, wherein clamping jaws 49, 50 are urged outward through openings in a bearing block 52 which is provided on the underside with a bowl-shaped bearing 53 as well as other wearing parts such as a ring 54 and the like which possibly have to be replaced during maintenance. Once ball 47 has been moved downward to the position shown in fig. 6B, an actuator pin 55 operating an arm 56 is depressed in order to operate a fork 57 counter to the action of a spring 58 and urge clamping parts 49 and 50 towards each other so that they then enclose ball 47, wherein clamping parts 49 and 50 are then enclosed in vertical direction in bearing block 52.

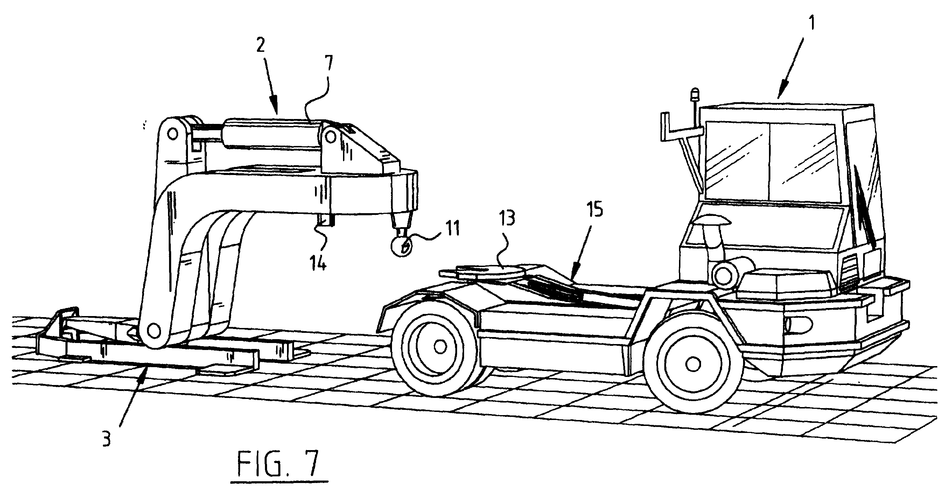

When a goose neck 2 according to the present invention is picked up using a tractor vehicle 1 according to the present invention (fig. 7), wherein goose neck 2 is disposed in a holder 3, the vehicle is driven in reverse beneath ball 13, wherein pin 14 is then situated above saddle 13. In a manner not shown the cylinder 7 is subsequently connected to the hydraulic system of tractor vehicle 1, whereafter using hydraulic cylinder 7 the ball 11 can be carried into the support part 15 therefor, whereafter the clamping parts close round ball 11. When driving away from holder 3 in a non-loaded transporting position, saddle 13 can be moved hydraulically upward, wherein the goose neck is then prevented from slewing sideways in such a transporting position, whereby safety is ensured.

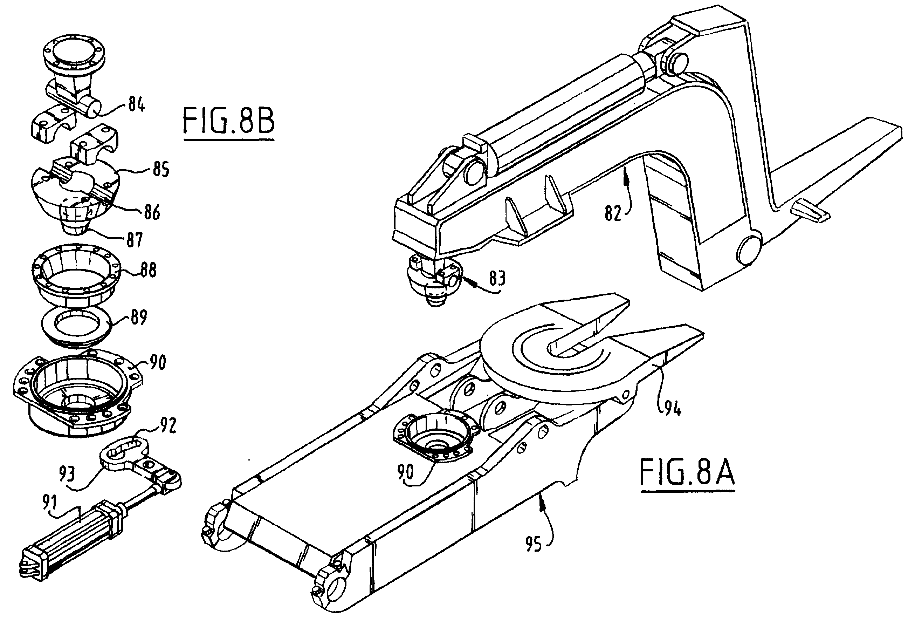

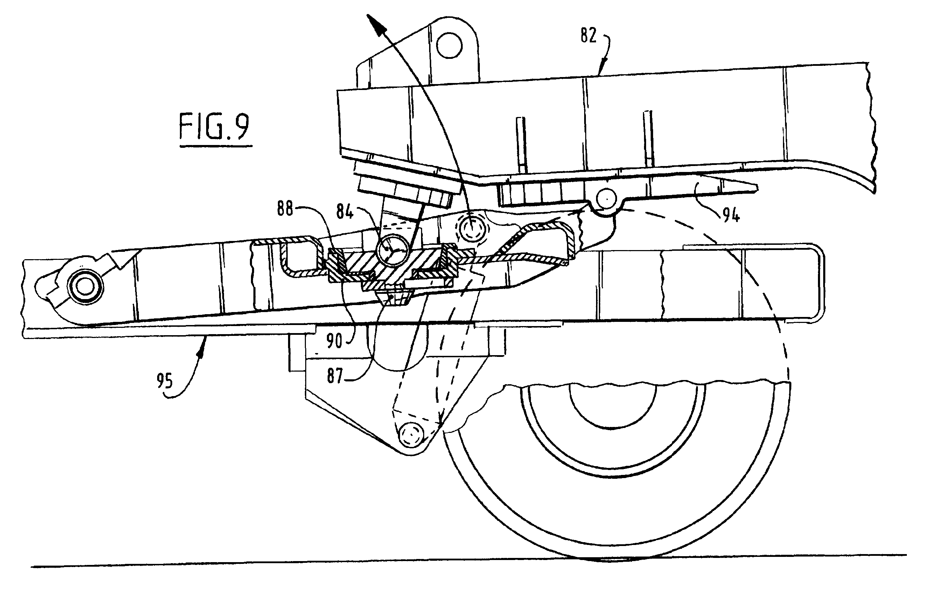

The preferred embodiment shown in fig. 8A, 8B and 9 has the additional advantage that possible tilting of highly stacked cargo, for instance two containers on top of each other, is prevented. Arranged on a goose neck 82 is a support part 83 which comprises a horizontal shaft part 84 which is supported in a frusto-conical component 85 provided with a groove 86 allowing shaft 84 to rotate. Part 85 is further provided on the underside with a pin part 87 which is provided with a groove and which protrudes through rings 88 and 89 beyond a bearing part 90 arranged on the vehicle. The pin part is fixed in its position using a hydraulic cylinder 91 and ring 93 provided with a profiled opening 92. Part 90 is fixed forward of a saddle coupling 94 to a component 95 of a vehicle (not further shown).

As will be apparent from figures 1, 2, 4, 7, 8 and 9, the goose neck according to the present invention is not provided with a ballast part on the front side since a safe transporting position is ensured by co-action of cylinder 7 and saddle 13. Compared with the conventional goose neck, wherein the saddle can be moved in lengthwise direction of the vehicle, the length of the vehicle together with the goose neck can remain smaller as the goose neck always occupies the same position relative to the vehicle in lengthwise direction thereof. This is of course also advantageous for manoeuvring in dockyards and particularly in the interior of a ship where the amount of space is in any case limited.

With the device shown in the figures cargo can be transported in and out of a ship relatively quickly in reliable and safe manner, even if this cargo is extremely heavy. For additional safety the front axle of the tractor vehicle can be further provided with measuring means in order to prevent the minimum load on the front axle being exceeded.

The present invention is not limited to the above described preferred embodiments thereof; the rights sought are defined by the following claims, within the scope of which many modifications can be envisaged.

## Claims

1. Device for coupling a tractor to cargo, for instance for transport of this cargo in and out of a ship, wherein the coupling device comprises:
- an at least partly curved, for instance goose neck-shaped connecting piece;
- pivoting means arranged on the connecting piece on the side to which the tractor is to be coupled; and
- tilting means for moving the connecting piece up and downward relative to the pivot point on the side which can be coupled to the cargo.

2. Device as claimed in claim 1, wherein the pivoting means comprise a ball joint.

3. Device as claimed in claim 1 or 2, wherein the tilting means comprise a hydraulic cylinder and a pivotable arm which is arranged on the side of the connecting piece to be coupled to the cargo.

4. Device as claimed in claim 1, wherein the pivoting means comprise a substantially horizontally extending shaft which is supported in a bearing part rotatable on a vertical axis.

5. Device as claimed in claim 4, wherein the rotatable part is frustro-conical.

6. Device as claimed in claim 4 or 5, wherein the rotatable part is provided with a pin part which can be fixed in vertical position by means of fixing means.

7. Tractor vehicle for pulling cargo, provided with supporting means for supporting a connecting piece as claimed in any of the claims 1-6.

8. Tractor vehicle as claimed in claim 7, wherein the vehicle is provided with a saddle coupling for coupling to a trailer for a goods vehicle and the supporting means are arranged forward of the saddle coupling.

9. Tractor vehicle as claimed in claim 7 or 8, wherein the supporting means comprise clamping parts which can be moved away from and towards each other in order to engage round the ball joint.

10. Tractor vehicle as claimed in claim 9, wherein the supporting means comprise a fork member which is slidable between a first position, wherein the clamping parts fixedly hold the pivoting means, and a second position wherein the clamping means are released for disengaging the pivoting means relative to the vehicle.

11. Trailer which can be driven under cargo such as a container and on which a device as claimed in any of the claims 1-6 is arranged.

12. Trailer as claimed in claim 11, wherein the wheels are hydraulically movable up and downward.

13. Method for driving cargo, preferably in the form of containers, on and off a ship, wherein a device as claimed in any of the claims 1-6, a tractor vehicle as claimed in any of the claims 7-10 and/or a trailer as claimed in claim 11 or 12 are used.
